(19) **Europäisches Patentamt / European Patent Office / Office européen des brevets**

(11) **EP 4 089 563 A1**

(12) **EUROPEAN PATENT APPLICATION**
published in accordance with Art. 153(4) EPC

(43) Date of publication:
**16.11.2022 Bulletin 2022/46**

(51) International Patent Classification (IPC):
***G06F 30/13*** (2020.01)

(21) Application number: **21850463.7**

(22) Date of filing: **12.04.2021**

(86) International application number:
**PCT/CN2021/086380**

(87) International publication number:
**WO 2022/021934 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2020 CN 202010732661**

(71) Applicant: **China Railway Major Bridge Reconnaissance & Design Institute Co., Ltd. Wuhan, Hubei 430000 (CN)**

(72) Inventors:
• **MIAO, Runchi**
  **Wuhan, Hubei 430000 (CN)**
• **GAO, Zongyu**
  **Wuhan, Hubei 430000 (CN)**
• **LI, Longan**
  **Wuhan, Hubei 430000 (CN)**
• **XU, Leiping**
  **Wuhan, Hubei 430000 (CN)**
• **DUAN, Xuewei**
  **Wuhan, Hubei 430000 (CN)**
• **KANG, Jin**
  **Wuhan, Hubei 430000 (CN)**
• **QU, Aiping**
  **Wuhan, Hubei 430000 (CN)**
• **HE, Youdi**
  **Wuhan, Hubei 430000 (CN)**

(74) Representative: **Gille Hrabal Partnerschaftsgesellschaft mbB Patentanwälte Brucknerstraße 20 40593 Düsseldorf (DE)**

(54) **WINDPROOF DESIGN METHOD FOR TRAFFIC SAFETY OF LARGE-SPAN RAILWAY BRIDGE AND WIND REDUCTION DEVICE**

(57) A windproof design method for traffic safety of a large-span railway bridge and a wind reduction device, relating to the technical field of bridge engineering. The present method comprises: obtaining a power index $\alpha$ of a wind profile index formula according to wind observation data provided by a weather station near a bridge site area of a bridge; using the wind profile index formula to convert $U_{weather}$ into $U_{bridge\ deck}$; establishing a wind-train-bridge coupling system to obtain, on the basis of the fact that $\gamma_{bridge\ deck}$ is not less than $\gamma_{weather}$ and regulations for segmented speed limits of trains on both land sides under the condition of $U_{weather}$, regulations for the segmented speed limits of trains under the condition of $U_{bridge\ deck}$; performing wind-train-bridge coupling analysis to obtain actual response results of the bridge and a train under the condition of limit train speed and multiple $U_{bridge\ decks}$; performing comparison analysis on the actual response results with a dynamic response evaluation standard to select a $U_{bridge\ deck}$, and determining, in combination with the regulations for the segmented speed limits of trains under the condition of $U_{bridge\ deck}$, the wind speed reduction coefficient of wind barriers, so as to design a wind reduction device. According to the present method, precise design of wind barriers for wind prevention and wind reduction is performed by combining the characteristics of the wind environment at the bridge site with the effect of coupling of the bridge with the train and the wind.

Fig. 1

**Description**

**Field of the Invention**

The present application relates to the technical field of bridge engineering, in particular to a windproof design method for traffic safety of a large-span railway bridge and a wind reduction device.

**Background of the Invention**

At present, with the development of our national economy, the bridge span is larger and larger, and the running speed of the train is higher and higher. Long span bridges are more sensitive to the effect of wind. The high-speed running speed of trains makes the coupling effect between wind, trains and bridges more significant, and the coupling effect between wind, trains and bridges will affect the running speed and stability of high-speed trains. However, in the efficient and fast-paced modern society, it is well known that the high-speed trains need to ensure all-weather, punctual and safe operation, so the research on the wind prevention and wind reduction design of the traffic safety of the railway bridge plays an important role in ensuring the all-weather, punctual and safe operation of the high-speed trains.
In related technologies, in order to enhance the running stability and safety of the high-speed trains under the action of side wind, wind barriers are set on the bridge to restrain and reduce the wind speed on the bridge deck, starting from the source of the side wind, to achieve the purpose of the wind prevention and wind reduction, and enhance the running stability of the high-speed trains.
However, in the design of the wind barriers, it is mostly a rough study on the shape and structure design of the wind barriers and the effect of the wind reduction; and failure to systematically consider the characteristics of the wind environment at the bridge site, the coupling effect of the bridge with the train and the wind, and other factors. The design of the wind prevention and wind reduction of the wind barriers is not accurate enough to effectively guarantee the traffic safety of the railway bridges.

**Summary of the Invention**

The embodiments of the present application provide a windproof design method for traffic safety of a large-span railway bridge and a wind reduction device, precise design of wind barriers for wind prevention and wind reduction is performed by combining the characteristics of the wind environment at the bridge site with the effect of coupling effect of the bridge with the train and the wind.
In the first aspect, the present application provides a windproof design method for traffic safety of a large-span railway bridge, comprising the following steps:

performing data fitting on a wind profile index formula and obtaining a power index $\alpha$ of the wind profile index formula according to wind observation data provided by a weather station near a bridge site area of a bridge;

converting weather station wind speed $U_{weather}$ in the wind observation data into bridge deck wind speed $U_{bridge\ deck}$ of the bridge by adopting the wind profile index formula;

on the basis of the fact that a traffic safety index $\gamma_{bridge\ deck}$ of trains under the action of $U_{bridge\ deck}$ is not lower than the traffic safety index $\gamma_{weather}$ of trains on both sides of the land under the action $U_{weather}$ and regulations for segmented speed limits of the trains on both sides of the land under the action of $U_{weather}$, obtaining the regulations for the segmented speed limits of the trains under the action of $U_{bridge\ deck}$;

establishing a wind-train-bridge coupling system, performing wind-train-bridge coupling analysis on the traffic safety index of the trains to obtain actual response results of the bridge and the train under the condition of limit train speed and a plurality of $U_{bridge\ decks}$; and

performing comparison analysis on the actual response results with a dynamic response evaluation standard to select a $U_{bridge\ deck}$ corresponding to the actual response result conforming to the dynamic response evaluation standard, and determining, in combination with the regulations for the segmented speed limits of the trains under the action of $U_{bridge\ deck}$, the wind speed reduction coefficient of wind barriers, so as to design a wind reduction device 100 in the form of a porous combination.

During this process, if it is found that all the actual response results of the wind-train-bridge coupling system conform to the dynamic response evaluation standard, it indicates that the wind reduction device 100 is unnecessary in this area.

In some embodiments, the wind profile index formula is:

$$U_Z = U_{S10} \left(\frac{Z}{10}\right)^\alpha$$

wherein $Z$ is a height of the wind profile, in m; $U_{S10}$ is the wind speed at the height of 10m at the bridge site, in m/s; $U_Z$ is the wind speed at the height $Z$ at the bridge site, in m/s; and $\alpha$ is the power index of the wind speed profile at the bridge site.

In some embodiments, the method for obtaining the power index $\alpha$ of the wind profile index formula is as follows:

recalling the complete wind observation data of a plurality of weather stations around the large-span railway bridge for a period of time;

for the wind observation data of each weather station, performing the fitting on $\alpha$ of $U_Z$ varying with the height $Z$ of the bridge site by means of a least square method to obtain $\alpha_1$, $\alpha_2$,... $\alpha_n$ corresponding to each weather station; and

calculating an average of $a_1$, $\alpha_2$,... $\alpha_n$ to get $\alpha$; wherein n is a total number of the weather stations.

In some embodiments, the method for converting $U_{weather}$ into $U_{bridge\ deck}$ is as follows:

converting $U_{weather}$ into $U_{S10}$, and $U_{S10} = K_1 * U_{weather}$, wherein $K_1$ is a correction coefficient of a terrain;

converting $U_{S10}$ into $U_Z$, and $U_Z = U_{S10} \left(\frac{Z}{10}\right)^\alpha$ ; and

converting $U_Z$ into $U_{bridge\ deck}$, $U_{bridge\ deck} = K_2 * U_Z = K_1 * K_2 * U_{weather} \left(\frac{Z}{10}\right)^\alpha$ , wherein $K_2$ is the correction coefficient of a cross-sectional shape.

In some embodiments, the method for obtaining the regulations for the segmented speed limits of the trains under the action of $U_{bridge\ deck}$ is as follows:

recalling the regulations for the segmented speed limits of the trains on both sides of the land under the action of $U_{weather}$; and

combining $U_{bridge\ deck} = K_1 * K_2 * U_{weather} \left(\frac{Z}{10}\right)^\alpha$ with $\gamma_{bridge\ deck} \geq \gamma_{weather}$, and calculating the regulations for the segmented speed limits of the trains under the action of $U_{bridge\ deck}$.

In some embodiments, the wind-train-bridge coupling system comprises a wind subsystem, a train subsystem, a rail subsystem and a bridge subsystem; the train subsystem and the rail subsystem have wheel-rail interactive forces; the rail subsystem and the bridge subsystem have bridge-rail interactive forces; and a wind load of the wind subsystem acts on the bridge subsystem and the train subsystem.

In some embodiments, the wind-train-bridge coupling system is expressed as:

$$\begin{cases} M_V \ddot{X}_V + C_V \dot{X}_V + K_V X_V = F_{V-T} + F_{W-V} \\ M_T \ddot{X}_T + C_T \dot{X}_T + K_T X_T = F_{T-V} + F_{B-T} \\ M_B \ddot{X}_B + C_B \dot{X}_B + K_B X_B = F_{T-B} + F_{W-B} \end{cases}$$

$M_V$, $C_V$ and $K_V$ are a mass matrix, a damping matrix and a stiffness matrix of the train subsystem respectively;

$M_T$, $C_T$ and $K_T$ are the mass matrix, the damping matrix and the stiffness matrix of the rail subsystem respectively;

$M_B$, $C_B$ and $K_B$ are the mass matrix, the damping matrix and the stiffness matrix of the bridge subsystem respectively;

$X_V$, $\dot{X}_V$ and $\ddot{X}_V$ are a displacement vector, a velocity vector and an acceleration vector of the train subsystem respectively;

$X_T$, $\dot{X}_T$ and $\ddot{X}_T$ are the displacement vector, the velocity vector and the acceleration vector of the rail subsystem respectively;

$X_B$, $\dot{X}_B$ and $\ddot{X}_B$ are the displacement vector, the velocity vector and the acceleration vector of the bridge subsystem respectively;

$F_{V-T}$ and $F_{T-V}$ are the interactive forces between the train and the rail;

$F_{B-T}$ and $F_{T-B}$ are the interactive forces between the rail and the bridge; and

$F_{W-V}$ and $F_{W-B}$ are the wind load of the wind subsystem respectively acting on the train and the bridge.

In some embodiments, $\gamma_{weather}$ and $\gamma_{bridge\ deck}$ both comprise a wheel load reduction rate and a vertical acceleration.

In some embodiments, an equivalent wind speed $U_{eq}$ of the bridge deck after $U_{bridge\ deck}$ is reduced by wind speed with the wind barriers is expressed as

$$U_{eq} = \lambda_s * U_{bridge\ deck} * f$$

wherein $\lambda_S$ represents a wind speed reduction coefficient; and $f$ represents a set safety coefficient.

In the second aspect, the present application provides a wind reduction device based on the windproof design method for traffic safety of the large-span railway bridge, the wind reduction device comprises a plurality of wind barrier columns which are vertically arranged, and a plurality of wind barrier strips which are horizontally arranged between two adjacent wind barrier columns; the wind barrier columns are fixed to the bridge structure by means of embedded parts, and the plurality of the wind barrier columns are fixedly connected by means of a plurality of horizontal wind barrier cables; and the two ends of each wind barrier strip are installed on two wind barrier columns by means of fastening bolts, a variety of circular holes with different sizes are opened on each wind barrier strip, and the wind speed reduction coefficient is realized by means of permutation and combination of a variety of circular holes with different sizes.

The beneficial effects brought by the technical solution provided in the present application comprise: the embodiment of the present application provides a windproof design method for traffic safety of a large-span railway bridge and a wind reduction device, when designing the wind reduction device, the present application not only considers the actual wind environment at the bridge site, but also considers the coupling effect of the bridge with the train and the wind, performs accurate and refined calculation, and performs comparison analysis on the actual response results of the bridge and the train and the dynamic response evaluation standard, so that the designed wind reduction device can effectively ensure the safety and comfort of the bridges and the trains; compared with the traditional rough design method, the design method of this present application is more accurate and clear, there is no need to leave a large margin for the reduction effect of the wind reduction device, and the wind reduction device is more economical and practical.

**Brief Description of the Drawings**

In order to better illustrate the technical solution in the embodiments of the present application, the following will briefly introduce the drawings needed in the description of the embodiments, and it is obvious that the drawings in the following description are only a part of embodiments of the present application, for those of ordinary skill in the art, other drawings may also be obtained based on these drawings without any inventive efforts.

Fig. 1 is a flowchart of a windproof design method for traffic safety of a large-span railway bridge in the embodiment of the present application.

Fig. 2 is a simplified schematic diagram of a wind reduction device in the embodiment of the present application (wind barrier strips does not comprise circular holes).

Fig. 3 is a left view of Fig. 1.

Fig. 4 is a front view of wind barrier strips in the embodiment of the present application.

Fig. 5 is a schematic diagram of a fitting curve of a power index in the embodiment of the present application.

Fig. 6 is a finite element solving model of a wind-train-bridge in the embodiment of the present application.

In the figures: 100-wind reduction device; 1-wind barrier column; 2-wind barrier strip; 3-wind barrier cable; 4-fastening bolt; 5-embedded part.

**Detailed Description of the Embodiments**

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

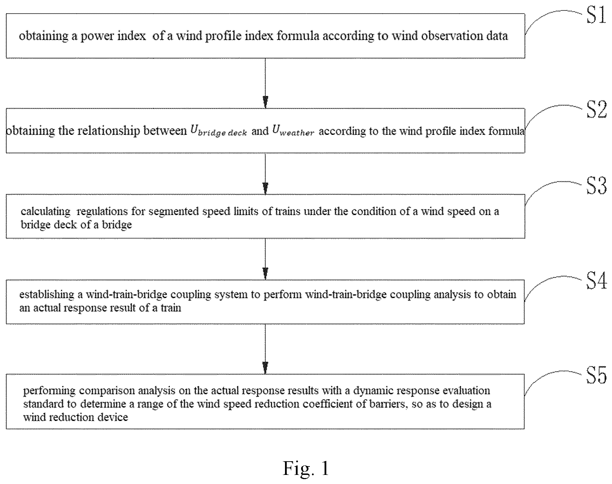

As shown in Fig. 1, the present application discloses an embodiment of a windproof design method for traffic safety of a large-span railway bridge, which is configured to reduce the adverse impact of wind on trains and bridges and improve the stability of vehicles and trains when high-speed trains run on the large-span bridge.

The windproof design method comprises the following steps:

S1: according to wind observation data provided by a weather station near a bridge site area of a bridge, substituting the wind observation data into a wind profile index formula, and performing data fitting on the wind profile index formula and obtaining a power index $\alpha$ of the wind profile index formula;

S2: converting weather station wind speed $U_{weather}$ in the wind observation data into bridge deck wind speed $U_{bridge\ deck}$ of the bridge by adopting the wind profile index formula;

S3: on the basis of the fact that a traffic safety index $\gamma_{bridge\ deck}$ of trains under the action of $U_{bridge\ deck}$ is not lower than the traffic safety index $\gamma_{weather}$ of trains on both sides of the land under the action $U_{weather}$ and regulations for segmented speed limits of the trains on both sides of the land under the action of $U_{weather}$, obtaining the regulations for the segmented speed limits of the trains under the action of $U_{bridge\ deck}$;

S4: establishing a wind-train-bridge coupling system, performing wind-train-bridge coupling analysis on the traffic safety index of the trains to obtain actual response results of the bridge and the train under the condition of limit train speed and a plurality of $U_{bridge\ decks}$; and

S5: performing comparison analysis on the actual response results with a dynamic response evaluation standard to select a $U_{bridge\ deck}$ corresponding to the actual response result conforming to the dynamic response evaluation standard, and determining, in combination with the regulations for the segmented speed limits of the trains under the action of $U_{bridge\ deck}$, the wind speed reduction coefficient of wind barriers, so as to design a wind reduction device 100 in the form of a porous combination.

Specifically, the wind profile index formula is:

$$U_Z = U_{S10} \left( \frac{Z}{10} \right)^{\alpha}$$

wherein Z is a height of the wind profile, in m; $U_{S10}$ is the wind speed at the height of 10m at the bridge site, in m/s; $U_Z$ is the wind speed at the height Z at the bridge site, in m/s; and $\alpha$ is the power index of the wind speed profile at the bridge site.

Specifically, the basis of this windproof design method is that there is a plurality of weather stations near the bridge site area, and there is also a weather station at the location of the bridge site area.

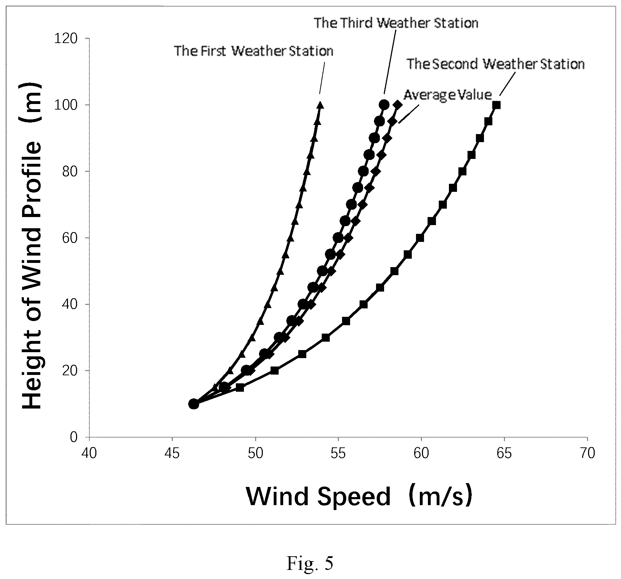

As shown in Fig. 5, further, the method for obtaining the power index $\alpha$ of the wind profile index formula is as follows:

recalling the complete wind observation data of the plurality of the weather stations around the large-span railway bridge for a period of time;

for the wind observation data of each weather station, performing the fitting on $\alpha$ of $U_Z$ varying with the height Z of the bridge site by means of a least square method to obtain $\alpha_1$, $\alpha_2...\alpha_n$ corresponding to each weather station; and

calculating an average of $\alpha_1$, $\alpha_2 ... \alpha_n$ to get $\alpha$; wherein n is a total number of the weather stations. When calculating the power index of the wind profile index formula, the present invention adopts the wind observation data of the plurality of the weather stations for fitting and solving, so as to make the obtained $\alpha$ more accurate and representative.

During the implementation of project A, there are 3 weather stations around the large-span bridge. Through recalling the complete wind observation data of the 3 weather stations for a whole year, the least square method is adopted to fit the power index $\alpha$ of the wind speed varying with the height to determine the power index. The results obtained are as follows:

Table 1.1 Fitting Power Index of Wind Observation Data of Three Weather Stations

| Weather Station | Power Index |
|---|---|
| The First Weather Station | 0.144 |
| The Second Weather Station | 0.066 |
| The Third Weather Station | 0.096 |
| Average Value | 0.102 |

The first weather station and the second weather station are the weather stations near the bridge site area, and the third weather station is the weather station where the bridge site area is located. Taking the average value from Table 1.1, the power index $\alpha$ of the wind speed profile at the bridge site is 0.102, and the wind profile index formula at the bridge site is:

$$U_Z = U_{S10} \left( \frac{Z}{10} \right)^{0.102}$$

Further, the method for converting $U_{weather}$ into $U_{bridge\ deck}$ is as follows:

Step 1: $U_{weather}$ is converted into $U_{S10}$, and $U_{S10} = K_1 * U_{weather}$. $K_1$ is a correction coefficient of a terrain. Taking the implementation of the project A as an example, $K_1$ is obtained through comparing and analyzing the wind observation data of the first weather station and the second weather station with the wind observation data of the third weather station in the same period.

Step 2: $U_{S10}$ is converted into $U_Z$, and $U_Z = U_{S10} \left( \frac{Z}{10} \right)^{\alpha}$.

Step 3: $U_Z$ is converted into $U_{bridge\ deck}$, $U_{bridge\ deck} = K_2 * U_Z = K_1 * K_2 * U_{weather} \left( \frac{Z}{10} \right)^{\alpha}$. $K_2$ is the correction coefficient of a cross-sectional shape. $U_Z$ represents the wind speed without shielding, while $U_{bridge\ deck}$ represents the bridge deck wind speed affected by the shielding of various structures such as steel truss girders. $K_2$ is calculated according to the known bridge parameters (comprising the shape, stiffness and strength of steel truss girders, etc.).

In the example of the project A, through comparing and analyzing the wind observation data of the first weather station and the second weather station with the wind observation data of the third weather station in the same period, $K_1$ = 1.3 is calculated, and $K_2$ = 0.8 is calculated according to the known bridge parameters.

Further, in the example of the project A, the height of the bridge deck is Z = 62.8m. To sum up, the following formula can be obtained:

$$U_{bridge\ deck} = K_1 * K_2 * U_{weather} \left(\frac{Z}{10}\right)^{\alpha} = 1.3 * 0.8 *$$
$$U_{weather} \left(\frac{62.8}{10}\right)^{0.102} = 1.254 * U_{weather}.$$

It can be seen that in the example of the project A, due to the influence of the terrain and the shape of the bridge, the bridge deck wind speed $U_{bridge\ deck}$ at the bridge site area is 1.254 times greater than the weather station wind speed $U_{weather}$ at the same height.

Further, the method for obtaining the regulations for the segmented speed limits of the trains under the action of $U_{bridge\ deck}$ is obtained as follows:

Step 1: recalling the regulations for the segmented speed limits of the trains on both sides of the land under the action of $U_{weather}$; and

Step 2: combining $U_{bridge\ deck} = K_1 * K_2 * U_{weather} \left(\frac{Z}{10}\right)^{\alpha}$ with $\gamma_{bridge\ deck} \geq \gamma_{weather}$, and calculating the regulations for the segmented speed limits of the trains under the action of $U_{bridge\ deck}$.

In the example of the project A, under the action of $U_{weather}$, the known regulations for the segmented speed limits of the trains on both sides of the land are shown in Table 1.2.

Table 1.2 Regulations for Segmented Speed Limits of Trains on Both Sides of Land Under Action of $U_{weather}$

| $U_{weather}$ (m/s) | Regulations |
|---|---|
| <20 | Normal operation |
| 20~25 | Train speed limit below 200km/h |
| 25~30 | Train speed limit below 120km/h |
| >30 | Withdrawn from schedule |

On the basis of Table 1.2, combined with $U_{bridge\ deck}$ = 1.254 * $U_{weather}$ and the fact that the traffic safety index $\gamma_{bridge\ deck}$ of the trains under the action of $U_{bridge\ deck}$ is not lower than the traffic safety index $\gamma_{weather}$ of the trains on both sides of the land under the action $U_{weather}$ (that is, the safety performance of the trains running on the bridge deck cannot be worse than that of the trains running on both sides of the land), the regulations for the segmented speed limits of the trains when running on the bridge deck, that is, under the action of $U_{bridge\ deck}$, can be obtained. When $\gamma_{bridge\ deck}$ > $\gamma_{weather}$, the calculated regulations for the segmented speed limits are shown in Table 1.3.

Table 1.3 Regulations for Segmented Speed Limits Under Action of $U_{bridge\ deck}$

| $U_{bridge\ deck}$ (m/s) | Regulations |
|---|---|
| <25.1 | Normal operation |
| 25.1~31.4 | Normal operation |
| 31.4~37.6 | Train speed limit below 200km/h |
| >37.6 | Withdrawn from schedule |

Table 1.3 is a design effect that researchers and developers want to achieve, but whether the train and the bridge are safe enough needs to be further verified. Further, a wind-train-bridge coupling system is established, which comprises a wind subsystem, a train subsystem, a rail subsystem and a bridge subsystem. The train subsystem and the rail subsystem have wheel-rail interactive forces. The rail subsystem and the bridge subsystem have bridge-rail interactive forces. A wind load of the wind subsystem acts on the bridge subsystem and the train subsystem.

The wind-train-bridge coupling system can take each subsystem (the wind subsystem, the train subsystem, the rail subsystem and the bridge subsystem) as an independent individual. The wind subsystem is established according to the known wind observation data, the train subsystem is established according to the known train parameters, and the rail subsystem is established according to rail design parameters (comprising structural parameters and mechanical parameters). The bridge subsystem is established according to bridge design parameters (comprising the structural parameters and the mechanical parameters). The solution can be solved through coupling wheel-rail interaction, bridge-rail interaction, wind-bridge interaction and wind-train interaction among the subsystems.

The wheel-rail interactive force is an external force for both the train and rail subsystems. The bridge-rail interactive force is also the external force for both the rail and bridge subsystems. The wind load is the external force for both the bridge and train subsystems. After these treatments, the differential equations of motion of the train, rail, and bridge subsystems can be solved respectively by means of a step-by-step integration method.

Specifically, the wind-train-bridge coupling system is expressed as:

$$\begin{cases} M_V \ddot{X}_V + C_V \dot{X}_V + K_V X_V = F_{V-T} + F_{W-V} \\ M_T \ddot{X}_T + C_T \dot{X}_T + K_T X_T = F_{T-V} + F_{B-T} \\ M_B \ddot{X}_B + C_B \dot{X}_B + K_B X_B = F_{T-B} + F_{W-B} \end{cases}$$

$M_V$, $C_V$ and $K_V$ are a mass matrix, a damping matrix and a stiffness matrix of the train subsystem respectively;

$M_T$, $C_T$ and $K_T$ are the mass matrix, the damping matrix and the stiffness matrix of the rail subsystem respectively;

$M_B$, $C_B$ and $K_B$ are the mass matrix, the damping matrix and the stiffness matrix of the bridge subsystem respectively;

$X_V$, $\dot{X}_V$ and $\ddot{X}_V$ are a displacement vector, a velocity vector and an acceleration vector of the train subsystem respectively;

$X_T$, $\dot{X}_T$ and $\ddot{X}_T$ are the displacement vector, the velocity vector and the acceleration vector of the rail subsystem respectively;

$X_B$, $\dot{X}_B$ and $\ddot{X}_B$ are the displacement vector, the velocity vector and the acceleration vector of the bridge subsystem respectively;

$F_{V-T}$ and $F_{T-V}$ are the interactive forces between the train and the rail;

$F_{B-T}$ and $F_{T-B}$ are the interactive forces between the rail and the bridge; and

$F_{W-V}$ and $F_{W-B}$ are the wind load of the wind subsystem respectively acting on the train and the bridge.

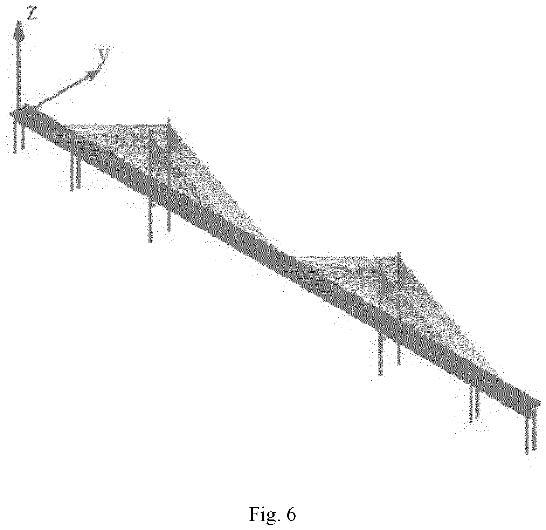

As shown in Fig. 6, on the basis of the wind-train-bridge coupling system, a finite element solving model of the wind-train-bridge is established, to perform separate iterative analysis on the wind-train-bridge coupling system, so as to obtain dynamic responses of the bridge and the train. The dynamic responses herein are actual response results. Specifically, $\gamma_{bridge\ deck}$ is the traffic safety index of the trains under the action of $U_{bridge\ deck}$ on the bridge deck; $\gamma_{weather}$ is the traffic safety index under the action of $U_{weather}$ on both sides of the land. The traffic safety indexes are evaluated by the dynamic responses of each bridge and train. The traffic safety indexes comprise the dynamic responses such as derailment coefficient, wheel load reduction rate, acceleration, and Sperling indexes, etc. Due to space limitations, the present invention only gives the dynamic response indexes with controllability, and the dynamic response indexes not given are always normal. Representative bullet trains and trailers are selected, the bullet trains and the trailers run in a safe, comfortable and stable way, and the known dynamic response evaluation standard is shown in Table 1.4.

Table 1.4 Dynamic Response Evaluation Standard

| Dynamic Responses of Bridge and Train | | | Standard |
|---|---|---|---|
| Bullet Train | Safety | Wheel Load Reduction Rate | 0.6 |
| | Comfort | Vertical Acceleration (m/s$^2$) | 1.3 |
| Trailer | Safety | Wheel Load Reduction Rate | 0.6 |
| | Comfort | Vertical Acceleration (m/s$^2$) | 1.3 |

In the example of the project A, the wind-train-bridge coupling analysis is performed through the wind-train-bridge coupling system, and the actual response results of the bullet trains and the trailers are obtained by calculation. The three representative working conditions are shown in Table 1.5.

Table 1.5 Dynamic Responses of Bullet Trains and Trailers

| Working Condition No. | | 1 | 2 | 3 |
|---|---|---|---|---|
| $U_{bridge\ deck}$ (m/s) | | 25 | 30 | 35 |
| Train Speed (km/h) | | 200 | 200 | 200 |
| Bullet Train | Vertical Acceleration (m/s$^2$) | 0.828 | 1.061 | 1.331 |
| | Wheel Load Reduction Rate | 0.471 | **0.801** | **1.012** |
| Trailer | Vertical Acceleration (m/s$^2$) | 0.909 | 1.182 | 1.738 |
| | Wheel Load Reduction Rate | 0.526 | **0.915** | **1.165** |

The train speed of 200km/h is a representative limit train speed. In the Chinese high-speed Electric Multiple Units (EMU), the G-head trains have the speed of is 250km/h-350km/h, and the D-head trains are ordinary EMUs with the speed of 160km/h-250km/h, mainly 200km/h. In this embodiment, 200km/h is selected as an example for calculation. In other embodiments, 250km/h or 350km/h can also be selected as the representative limit train speed.

It can be seen from Table 1.4 and Table 1.5 that when the limit train speed is 200km/h, when $U_{bridge\ deck}$ is 25m/s or less than 25m/s, the dynamic responses of the bullet train or the trailer fully conform to the dynamic response evaluation standard. When the wind speed reaches 30m/s, the wheel load reduction rates of the bullet train and the trailer are greater than the dynamic response evaluation standard of 0.6. Due to space limitations, the unlisted response indexes under the different wind speeds all meet the dynamic response evaluation standard. Further, in other embodiments, the wind speed between 25m/s and 30m/s can also be calculated and analyzed.

When the wind speed on the bridge deck of the bridge reaches 30m/s, the traffic safety of the train on the bridge does not conform to the dynamic response evaluation standard, which is unsafe for train running. Therefore, the design of the wind prevention and wind reduction is required.

The ultimate purpose is to ensure that the dynamic responses of the bullet train and the trailer subjected to the wind-train-bridge coupling analysis conform to the dynamic response evaluation standard after the design of the wind prevention and reduction is performed. In order to achieve the above purpose, according to Table 1.5, it can be known that when $U_{bridge\ deck} \leq 25$m/s, all of the dynamic responses of the bullet train and the trailer conform to the dynamic response evaluation standard. Therefore, it is only necessary to make the equivalent wind speed $U_{eq}$ of $U_{bridge\ deck}$ after the wind prevention and wind reduction meet Table 1.3. The technical requirements of wind speed reduction coefficient obtained are shown in Table 1.6.

Table 1.6 Technical Requirements of Wind Speed Reduction Coefficient

| Wind Speed on Bridge Deck of Bridge (m/s) | Wind Speed Reduction Coefficient | Equivalent Wind Speed on Bridge Deck (m/s) | Solutions |
|---|---|---|---|
| <25.1 | | | Normal operation |
| 25.1~31.4 | | <25 | Normal operation |
| 31.4~37.6 | <0.66 | <30 | Train speed limit below 200km/h |
| >37.6 | | >30 | Withdrawn from schedule |

Specifically, the equivalent wind speed $U_{eq}$ of the bridge deck after $U_{bridge\ deck}$ is reduced by the wind speed with the wind barriers is expressed as $U_{eq} = \lambda_S * U_{bridge\ deck} * f$. $\lambda_S$ represents the wind speed reduction coefficient, and $f$ represents a set safety coefficient. The safety coefficient is to leave a certain margin in the design. Therefore, the calculation result $\lambda_S < 0.66$ in Table 1.6 is derived from 0.66=31.4/25/1.2.

Specifically, in this embodiment, the $U_{bridge\ deck}$ of 25m/s corresponding to the actual response result conforming to the dynamic response evaluation standard is selected, and the range of the wind speed reduction coefficient of the wind barriers is determined to be $\lambda_S < 0.66$ in combination with the regulations for the segmented speed limits of the trains under the action of $U_{bridge\ deck}$, that is, Table 1.3. After the range of the wind speed reduction coefficient is determined, the wind barrier is designed in the form of a porous combination.

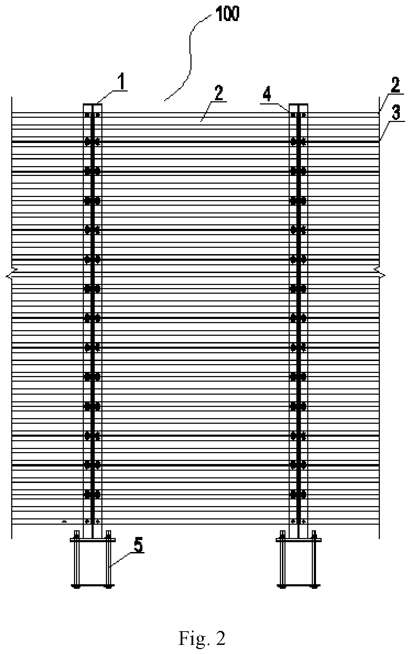

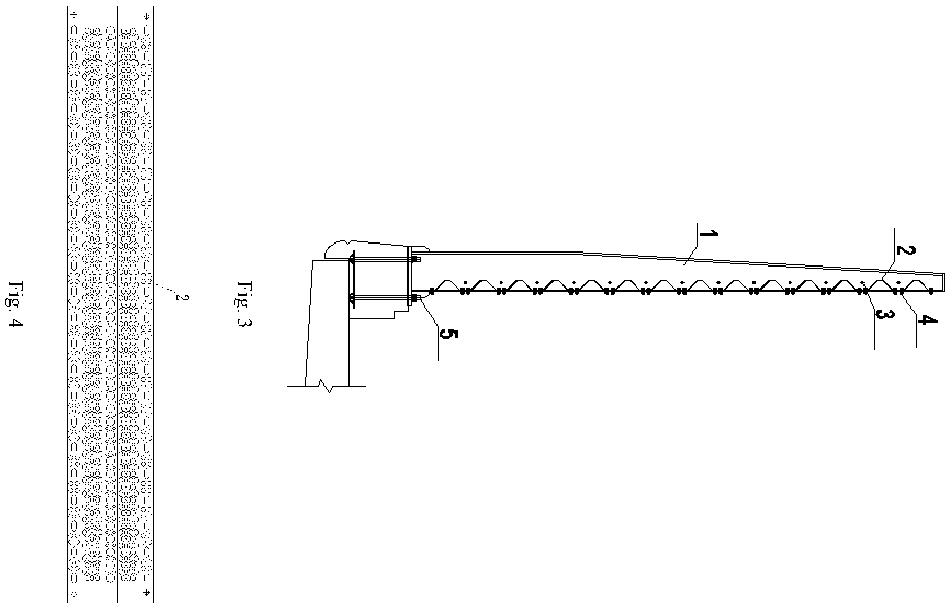

As shown in Fig. 2, Fig. 3 and Fig. 4, the present invention further discloses an embodiment of a wind reduction device based on the windproof design method for traffic safety of the large-span railway bridge. The wind reduction device 100 comprises wind barrier columns 1, wind barrier strips 2 and wind barrier cables 3. A plurality of the wind barrier columns 1 are arranged vertically, and a plurality of the wind barrier strips 2 are arranged horizontally between two adjacent wind barrier columns 1. The wind barrier columns 1 are fixed to the bridge structure by means of embedded parts 5, and the two ends of each wind barrier strip 2 are installed on two wind barrier columns 1 by means of fastening bolts 4. A variety of circular holes with different sizes are opened on each wind barrier strip 2 in the form of a porous combination, and the wind speed reduction coefficient of the design requirements is realized by means of permutation and combination of a variety of circular holes with different sizes. The design form of the porous combination adopted by the present invention has high efficiency and flexible design. The wind speed reduction coefficient required by the design can be formed by the flexible combination of the variety of holes. The wind reduction device 100 adopts the wind barrier columns 1 and the wind barrier strips 2, and the design length can be extended freely. The wind barrier cables 3 further strengthen the strength of the wind reduction device 100 so as to make the wind reduction device 100 more firm and reliable. Preferably, each wind barrier strip 2 is bent in the up-down direction.

Specifically, the wind barrier column 1 has a certain width, half of which is connected to the wind barrier strip 2 on the left, and the other half is connected to the wind barrier strip 2 on the right. Further, the material of the wind reduction device 100 is steel. The circular holes of each wind barrier strip 2 are permutated and combined by the circular holes with diameters of 8 mm, 12.5 mm, 16 mm and 25 mm. In the actual design process, the height of the wind reduction device 100 can be adjusted according to the number of the wind barrier strips 2. The permutation and combination of four kinds of circular holes of 8 mm, 12.5 mm, 16 mm and 25 mm are adopted, which can better and faster design the wind speed reduction coefficient that meets the design requirements.

In the example of the project A, the wind barrier strip adopts a porous form, and the diameters of the opening are mainly a combination of 8 mm, 12.5 mm, 16 mm and 25 mm. The wind barrier reduction coefficient is 0.66 (that is, the ventilation rate of the wind barrier strip is 36.5%), and the height of the wind barrier strip is 0.25m, which is connected to the wind barrier column by means of bolts. The height of the wind barrier is determined as 3.5 m, and 14 wind barrier strips are adopted.

Finally, the designed wind reduction device is substituted into the wind-train-bridge coupling finite element model for verification. The response results are shown in Table 1.7.

Table 1.7 Responses Comparison of Bullet Trains and Trailers Designed with Wind Reduction Device

| Whether to Set Wind Barriers | | Without Wind Barriers | Wind Barriers with Circular Holes at 3.5m |
|---|---|---|---|
| Wind Speed on Bridge Deck of Bridge (m/s) | | 30 | 30 |
| Train Speed (km/h) | | 200 | 200 |
| Vertical Acceleration (m/s$^2$) | Bullet Train | 1.061 | 0.737 |
| | Reduction Rate | n/a | 30.5% |
| | Trailer | 1.182 | 0.922 |
| | Reduction Rate | n/a | 22.0% |
| Wheel Load Reduction Rate | Bullet Train | 0.801 | 0.376 |
| | Reduction Rate | n/a | 53.1% |
| | Trailer | 0.915 | 0.41 |
| | Reduction Rate | n/a | 55.2% |
| Note: Reduction Rate=(No Wind Barrier Condition - Set Wind Barrier Condition)/No Wind Barrier Condition | | | |

Therefore, the vertical acceleration and the wheel load reduction rate of the bullet trains and the trailers conform to the dynamic response evaluation standard (see Table 1.4), and the designed wind reduction device meets the requirements of the traffic safety of the trains. The verification step makes the design of the wind reduction device safer and more reliable.

The present invention discloses a windproof design method for traffic safety of a large-span railway bridge and a wind reduction device. The windproof design method has clear objectives. When designing the wind reduction device, the windproof design method not only considers the actual wind environment at the bridge site, but also considers the coupling effect of the bridge with the train and the wind, performs accurate and refined calculation, and performs comparison analysis on the actual response results of the bridge and the train with the dynamic response evaluation standard. The design of the wind protection and wind reduction are reasonable, so that the designed wind reduction device can effectively ensure the safety and comfort of the bridges and the trains, thereby effectively improving the working efficiency of designers.

The above is only the specific embodiments of the present application, so that those skilled in the art can understand or realize the present application. Various modifications to these embodiments will be apparent to those skilled in the art, and the general principles defined herein can be implemented in other embodiments without departing from the spirit or scope of the present application. Therefore, the present application will not be limited to these embodiments shown herein, but shall conform to the widest scope consistent with the principles and novel features applied herein.

**Claims**

1. A windproof design method for traffic safety of a large-span railway bridge, comprising the following steps:

performing data fitting on a wind profile index formula and obtaining a power index $\alpha$ of the wind profile index formula according to wind observation data provided by a weather station near a bridge site area of a bridge;
converting weather station wind speed $U_{weather}$ in the wind observation data into bridge deck wind speed $U_{bridge\ deck}$ of the bridge by adopting the wind profile index formula;
on the basis of the fact that a traffic safety index $\gamma_{bridge\ deck}$ of trains under the action of $U_{bridge\ deck}$ is not lower than the traffic safety index $\gamma_{weather}$ of trains on both sides of the land under the action $U_{weather}$ and regulations for segmented speed limits of the trains on both sides of the land under the action of $U_{weather}$, obtaining the regulations for the segmented speed limits of the trains under the action of $U_{bridge\ deck}$;
establishing a wind-train-bridge coupling system, performing wind-train-bridge coupling analysis on the traffic safety index of the trains to obtain actual response results of the train under the condition of limit train speed and a plurality of $U_{bridge\ decks}$; and
performing comparison analysis on the actual response results with a dynamic response evaluation standard to select a $U_{bridge\ deck}$ corresponding to the actual response result conforming to the dynamic response evaluation standard, and determining, in combination with the regulations for the segmented speed limits of the trains under the action of $U_{bridge\ deck}$, the wind speed reduction coefficient of wind barriers, so as to design a wind reduction device (100) in the form of a porous combination.

2. The windproof design method for traffic safety of the large-span railway bridge according to claim 1, wherein the wind profile index formula is:

$$U_Z = U_{S10} \left( \frac{Z}{10} \right)^{\alpha}$$

wherein Z is a height of the wind profile, in m; $U_{S10}$ is the wind speed at the height of 10m at the bridge site, in m/s; $U_Z$ is the wind speed at the height Z at the bridge site, in m/s; and $\alpha$ is the power index of the wind speed profile at the bridge site.

3. The windproof design method for traffic safety of the large-span railway bridge according to claim 2, wherein the method for obtaining the power index $\alpha$ of the wind profile index formula is as follows:

recalling the complete wind observation data of a plurality of weather stations around the large-span railway bridge for a period of time;
for the wind observation data of each weather station, performing the fitting on $\alpha$ of $U_Z$ varying with the height Z of the bridge site by means of a least square method to obtain $\alpha_1, \alpha_2, ... \alpha_n$ corresponding to each weather station; and
calculating an average of $a_1, \alpha_2, ... \alpha_n$ to get $\alpha$, wherein n is a total number of the weather stations.

4. The windproof design method for traffic safety of the large-span railway bridge according to claim 2, wherein the method for converting $U_{weather}$ into $U_{bridge\ deck}$ is as follows:

converting $U_{weather}$ into $U_{S10}$, and $U_{S10} = K_1 * U_{weather}$, wherein $K_1$ is a correction coefficient of a terrain;

converting $U_{S10}$ into $U_Z$, and $U_Z = U_{S10} \left(\dfrac{Z}{10}\right)^{\alpha}$ ; and

converting $U_Z$ into $U_{bridge\ deck}$, $U_{bridge\ deck} = K_2 * U_Z = K_1 * K_2 * U_{weather} \left(\dfrac{Z}{10}\right)^{\alpha}$ , wherein $K_2$ is the correction coefficient of a cross-sectional shape.

5. The windproof design method for traffic safety of the large-span railway bridge according to claim 4, wherein the method for obtaining the regulations for the segmented speed limits of the trains under the action of $U_{bridge\ deck}$ is as follows:

recalling the regulations for the segmented speed limits of the trains on both sides of the land under the action of $U_{weather}$; and

combining $U_{bridge\ deck} = K_1 * K_2 * U_{weather} \left(\dfrac{Z}{10}\right)^{\alpha}$ with $\gamma_{bridge\ deck} \geq \gamma_{weather}$, and calculating the regulations for the segmented speed limits of the trains under the action of $U_{bridge\ deck}$.

6. The windproof design method for traffic safety of the large-span railway bridge according to claim 1, wherein the wind-train-bridge coupling system comprises a wind subsystem, a train subsystem, a rail subsystem and a bridge subsystem; the train subsystem and the rail subsystem have wheel-rail interactive forces; the rail subsystem and the bridge subsystem have bridge-rail interactive forces; and a wind load of the wind subsystem acts on the bridge subsystem and the train subsystem.

7. The windproof design method for traffic safety of the large-span railway bridge according to claim 6, wherein the wind-train-bridge coupling system is expressed as:

$$\begin{cases} M_V \ddot{X}_V + C_V \dot{X}_V + K_V X_V = F_{V-T} + F_{W-V} \\ M_T \ddot{X}_T + C_T \dot{X}_T + K_T X_T = F_{T-V} + F_{B-T} \\ M_B \ddot{X}_B + C_B \dot{X}_B + K_B X_B = F_{T-B} + F_{W-B} \end{cases}$$

$M_V$, $C_V$ and $K_V$ are a mass matrix, a damping matrix and a stiffness matrix of the train subsystem respectively;
$M_T$, $C_T$ and $K_T$ are the mass matrix, the damping matrix and the stiffness matrix of the rail subsystem respectively;
$M_B$, $C_B$ and $K_B$ are the mass matrix, the damping matrix and the stiffness matrix of the bridge subsystem respectively;
$X_V$, $\dot{X}_V$ and $\ddot{X}_V$ are a displacement vector, a velocity vector and an acceleration vector of the train subsystem respectively;
$X_T$, $\dot{X}_T$ and $\ddot{X}_T$ are the displacement vector, the velocity vector and the acceleration vector of the rail subsystem respectively;
$X_B$, $\dot{X}_B$ and $\ddot{X}_B$ are the displacement vector, the velocity vector and the acceleration vector of the bridge subsystem respectively;
$F_{V-T}$ and $F_{T-V}$ are the interactive forces between the train and the rail;
$F_{B-T}$ and $F_{T-B}$ are the interactive forces between the rail and the bridge; and
$F_{W-V}$ and $F_{W-B}$ are the wind load of the wind subsystem respectively acting on the train and the bridge.

8. The windproof design method for traffic safety of the large-span railway bridge according to claim 1, wherein $\gamma_{weather}$ and $\gamma_{bridge\ deck}$ both comprise a wheel load reduction rate and a vertical acceleration.

9. The windproof design method for traffic safety of the large-span railway bridge according to claim 1, wherein

an equivalent wind speed $U_{eq}$ of the bridge deck after $U_{bridge\ deck}$ is reduced by wind speed with the wind barriers is expressed as

$$U_{\mathrm{eq}} = \lambda_s * U_{\mathrm{bridge\ deck}} * f$$

wherein $\lambda_s$ represents a wind speed reduction coefficient; and $f$ represents a set safety coefficient.

10. A wind reduction device based on the windproof design method for traffic safety of the large-span railway bridge according to claim 1, wherein the wind reduction device (100) comprises a plurality of wind barrier columns (1) which are vertically arranged, and a plurality of wind barrier strips (2) which are horizontally arranged between two adjacent wind barrier columns (1); the wind barrier columns (1) are fixed to the bridge structure by means of embedded parts (5), and the plurality of the wind barrier columns (1) are fixedly connected by means of a plurality of horizontal wind barrier cables (3); and the two ends of each wind barrier strip (2) are installed on two wind barrier columns (1) by means of fastening bolts (4), a variety of circular holes with different sizes are opened on each wind barrier strip (2), and the wind speed reduction coefficient is realized by means of permutation and combination of a variety of circular holes with different sizes.

obtaining a power index of a wind profile index formula according to wind observation data ⌐ S1

obtaining the relationship between $U_{bridge\ deck}$ and $U_{weather}$ according to the wind profile index formula ⌐ S2

calculating regulations for segmented speed limits of trains under the condition of a wind speed on a bridge deck of a bridge ⌐ S3

establishing a wind-train-bridge coupling system to perform wind-train-bridge coupling analysis to obtain an actual response result of a train ⌐ S4

performing comparison analysis on the actual response results with a dynamic response evaluation standard to determine a range of the wind speed reduction coefficient of barriers, so as to design a wind reduction device ⌐ S5

Fig. 1

Fig. 2

Fig. 3

Fig. 4

Fig. 5

Fig. 6

## INTERNATIONAL SEARCH REPORT

International application No.

**PCT/CN2021/086380**

**A.    CLASSIFICATION OF SUBJECT MATTER**

G06F 30/13(2020.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI: 风, 风速, 剖面, 车, 车速, 铁路, 轨道, 桥, 桥面, 限速, 减风, 防风, 安全, 风障, wind, profile, vehicle, train, speed, railway, bridge, floor, floorby, limit, reduce, windproof, safety, barrier, break

**C.    DOCUMENTS CONSIDERED TO BE RELEVANT**

| Category* | Citation of document, with indication, where appropriate, of the relevant passages | Relevant to claim No. |
|---|---|---|
| PX | CN 111931277 A (CHINA RAILWAY MAJOR BRIDGE RECONNAISSANCE & DESIGN INSTITUTE CO., LTD.) 13 November 2020 (2020-11-13)<br>claims 1-10 | 1-10 |
| A | CN 108268711 A (JIAXING UNIVERSITY) 10 July 2018 (2018-07-10)<br>description, paragraphs [0049]-[0068] | 1-10 |
| A | CN 110276111 A (CHINA HIGHWAY ENGINEERING CONSULTING CORPORATION) 24 September 2019 (2019-09-24)<br>entire document | 1-10 |
| A | CN 103577652 A (CHINA RAILWAY SIYUAN SURVEY AND DESIGN GROUP CO., LTD. et al.) 12 February 2014 (2014-02-12) | 1-10 |
| A | JP 2013086722 A (HIGASHI NIPPON RYOKAKU TETSUDO K.K.) 13 May 2013 (2013-05-13)<br>entire document | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2021** | **08 July 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/086380**

| Patent document cited in search report | | | Publication date (day/month/year) | Patent family member(s) | | | Publication date (day/month/year) |
|---|---|---|---|---|---|---|---|
| CN | 111931277 | A | 13 November 2020 | None | | | |
| CN | 108268711 | A | 10 July 2018 | None | | | |
| CN | 110276111 | A | 24 September 2019 | CN | 110991028 | A | 10 April 2020 |
| CN | 103577652 | A | 12 February 2014 | None | | | |
| JP | 2013086722 | A | 13 May 2013 | None | | | |

Form PCT/ISA/210 (patent family annex) (January 2015)